Europäisches Patentamt

European Patent Office

Office européen des brevets

(19)

(11) **EP 0 909 210 B1**

(12) **FASCICULE DE BREVET EUROPEEN**

(45) Date de publication et mention
de la délivrance du brevet:
**20.12.2000 Bulletin 2000/51**

(51) Int Cl.[7]: **B01D 65/10**, G01N 15/08

(21) Numéro de dépôt: **97926047.8**

(22) Date de dépôt: **28.05.1997**

(86) Numéro de dépôt international:
**PCT/FR97/00930**

(87) Numéro de publication internationale:
**WO 97/45193 (04.12.1997 Gazette 1997/52)**

(54) **PROCEDE ET INSTALLATION POUR TESTER IN SITU L'INTEGRITE DES MEMBRANES DE FILTRATION**

VERFAHREN UND EINRICHTUNG ZUR IN SITU FUNKTIONSPRÜFUNG VON FILTRATIONSMEMBRANEN

METHOD AND INSTALLATION FOR IN SITU TESTING OF FILTERING MEMBRANE INTEGRITY

(84) Etats contractants désignés:
**AT BE CH DE DK ES FI GB GR IE IT LI LU MC NL PT SE**

(30) Priorité: **28.05.1996 FR 9606780**

(43) Date de publication de la demande:
**21.04.1999 Bulletin 1999/16**

(73) Titulaire: **OTV Omnium de Traitements et de Valorisation**
**94417 St Maurice Cédex (FR)**

(72) Inventeur: **COTE, Pierre**
**F-78570 Andresy (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
| | |
|---|---|
| EP-A- 0 064 159 | EP-A- 0 139 202 |
| EP-A- 0 517 501 | EP-A- 0 592 066 |
| DE-A- 3 312 729 | DE-A- 3 917 856 |
| DE-A- 4 421 639 | GB-A- 2 132 366 |

## Description

L'invention concerne le domaine des procédés et des installations de filtration utilisés pour l'épuration de liquides, notamment des eaux, du type incluant au moins une membrane de filtration.

Le procédé et l'installation selon l'invention trouvent leur application préférentielle dans le domaine de l'épuration des eaux en vue de leur potabilisation. Toutefois, l'homme du métier pourra envisager d'en utiliser les principes pour d'autres types de traitements ou encore pour le traitement d'autres liquides que l'eau.

Les traitements des eaux en vue de leur potabilisation ont, compte tenu des normes actuellement en vigueur, les objectifs principaux suivants :

- éliminer les matières en suspension,
- éliminer les matières organiques,
- éliminer les ions gênants,
- stériliser.

Les chaînes de traitement classiques mettant en oeuvre de tels traitements font intervenir une succession d'étapes physico-chimiques du type coagulation-floculation-décantation-filtration généralement complétée par une étape d'oxydation.

Le rôle de l'étape de filtration auquel se rapporte plus précisément l'invention est de désinfecter les eaux traitées en retenant les micro-organismes (virus, bactéries et protozoaires) contenus dans celles-ci et notamment les micro-organismes pathogènes.

Une telle étape de filtration sur membranes est avantageusement effectuée grâce à des membranes organiques présentant des pores de diamètres plus ou moins élevés selon la taille des particules à retenir et pouvant par ailleurs présenter différentes configurations (fibres creuses, modules spiralés, etc...).

L'ultrafiltration et la microfiltration sur membranes organiques sont ainsi considérées comme d'excellentes méthodes de traitement et de potabilisation des eaux.

L'un des problèmes principaux posé par les installations de filtration à membranes réside dans les fuites qui peuvent apparaître dans celles-ci et provoquer une diminution notable de leur efficacité.

En pratique, il existe plusieurs sources potentielles de fuites dans de telles installations à membranes, au rang desquelles ont peut notamment citer : les imperfections des membranes, les joints mécaniques, les joints et tampons de colle et les bris de membranes. En ce qui concerne ce dernier point, ce problème est accru avec les membranes constituées de fibres creuses qui sont relativement fragiles.

Pour contrer ce problème il est donc essentiel, notamment dans le contexte de la potabilisation de l'eau, de disposer de procédés permettant de s'assurer de l'intégrité des systèmes membranaires et de vérifier que ceux-ci sont exempts de fuites. De tels procédés sont destinés à localiser rapidement les fuites de façon à pouvoir réparer ou remplacer les éléments défaillants responsables de la fuite localisée. De tels procédés doivent impérativement pouvoir être mis en oeuvre in situ c'est-à-dire directement sur l'installation de filtration sans avoir à démonter les membranes de filtration.

Il a été proposé dans l'état de la technique plusieurs procédés permettant d'atteindre cet objectif.

Certains procédés proposent simplement de compter les particules dans le liquide filtré (perméat) afin de déterminer si l'opération de filtration est correctement effectuée par l'installation testée. En pratique, si le nombre de particules retrouvées dans le perméat est trop élevé, il peut être conclu qu'une fuite existe au niveau de l'installation. Quoiqu'efficaces, de tels procédés présentent plusieurs inconvénients. En premier lieu, ils nécessitent la mise en oeuvre d'un matériel relativement sophistiqué et coûteux nécessaire au comptage des particules. En second lieu et surtout, ils présentent l'inconvénient de ne pouvoir être facilement mise en oeuvre sur des eaux initialement peu chargées en particules à filtrer.

La demande de brevet japonais JP-A-H7024273 propose d'utiliser un gaz chargé en particules de taille constante et selon une concentration constante, de filtrer le gaz en question avec la membrane à tester et de détecter les particules du côté perméat. Une telle technique a l'inconvénient d'impliquer l'utilisation d'un fluide particulier, à savoir un gaz chargé en particules, dont la composition doit être constante, ce qui accroit la complexité du test d'intégrité et son coût.

La demande de brevet japonais JP-A-H7060073 propose quant à elle une technique consistant à installer un microfiltre à la sortie de l'installation principale de filtration et à mesurer de temps en temps la pression au niveau de ce microfiltre. Toute augmentation de pression au niveau du microfiltre indique la présence d'une fuite. Une telle technique présente le principal inconvénient de nécessiter l'utilisation d'un dispositif supplémentaire de filtration relativement difficile à mettre en oeuvre et impliquant une augmentation sensible du coût global de l'installation.

Une autre méthode consiste à utiliser un hydrophone pour détecter les bruits résultant de la casse des fibres creuses. Toutefois, ce type de test ne permet pas de détecter les fuites sur les autres types de membranes que celles à fibres creuses où l'air est utilisé pour le rétrolavage.

Il a également été proposé dans l'état de la technique, notamment dans la demande de brevet américain US-A-5353630, d'évaluer l'intégrité de membranes de filtration en mettant en oeuvre le principe du point de bulle. Cette mesure consiste à mouiller la membrane à tester et à la soumettre à une pression d'air croissant graduellement jusqu'à ce que l'air chasse le liquide par les orifices de fuite de ladite membrane. En utilisant des pressions de test comprises entre 0,5 bar et 1 bar environ, on peut ainsi détecter la présence d'orifices présentant une taille de l'ordre du micron correspondant à des imperfections dans la couche filtrante, à des joints qui fuient, à des fibres creuses cassées etc... De tels orifices de fuite présentent des tailles bien supérieures aux seuils de coupure des membranes testées qui sont de l'ordre de 0,1 $\mu$m pour les membranes de microfiltration, de l'ordre de 0,001 $\mu$m pour les membranes d'ultrafiltration et encore plus faibles en osmose inverse.

L'équation de Young et Laplace permet d'estimer la tailles de ces orifices laissant passer l'air et ainsi de déterminer si la membrane présente ou non des fuites. En effet, selon cette équation :

$$d = 4 \ \gamma \ Kt \ \cos\theta/\Delta P$$

dans laquelle, d est le diamètre de l'orifice, $\gamma$ est la tension superficielle à l'interface air-liquide, Kt est un facteur de correction tenant compte de la tortuosité des pores et dont la valeur est typiquement de 0,2 à 0,3 pour les membranes fabriquées par inversion de phase, $\Delta P$ est le point de bulle, $\gamma$ est la tension superficielle à l'interface air-liquide. On notera que lorsqu'une bulle d'air pénètre un orifice, le diamètre de cette bulle atteint celui de l'orifice, donc $\theta = 0$ et cos $\theta = 1$.

Le brevet US-A-5353630 décrit un procédé consistant à mettre sous pression d'air le compartiment amont délimité par la membrane et à mesurer le débit d'air représentant le débit d'air passant par la membrane.

Une telle technique présente l'inconvénient de nécessiter une mise sous pression du compartiment amont, ce qui induit la nécessité d'équiper l'installation de moyens permettant de fournir de l'air sous pression. Or, de tels moyens ne sont présents que sur seulement certains types d'installation de filtration, notamment celles mettant en oeuvre un rétrolavage des membranes à l'air.

L'objectif de la présente invention est de proposer un procédé d'évaluation de l'intégrité de membranes de filtration ne présentant pas les inconvénients de l'état de la technique.

Notamment, un objectif de l'invention est de présenter un tel procédé mettant en oeuvre le principe de la mesure du point de bulle mais n'impliquant pas l'utilisation d'air sous pression.

Un autre objectif de l'invention est de décrire un tel procédé pouvant être mis en oeuvre pour n'importe quel type de membranes, qu'elles soient d'ultrafiltration, de microfiltration, de nanofiltration ou d'osmose inverse, symétrique ou asymétrique, composite ou non, pour n'importe quelle configuration de membranes (fibres creuses, modules spiralés, etc ...)

Encore un objectif de l'invention est de proposer un tel procédé pouvant être facilement mis en oeuvre pour un ensemble de modules membranaires ou pour un module donné.

Ces différents objectifs, ainsi que d'autres qui apparaitront par la suite sont atteints grâce à l'invention qui concerne un procédé pour tester l'intégrité d'au moins une membrane de filtration d'un liquide, ladite membrane délimitant au sein d'un dispositif de filtration un compartiment amont accueillant ledit liquide à filtrer et un compartiment perméat recueillant ledit liquide filtré, ledit procédé étant caractérisé en ce qu'il comprend les étapes consistant à :

- remplir ledit compartiment amont d'air pour le mettre à la pression atmosphérique $P_{atm}$ et appliquer un vide partiel dans ledit compartiment perméat de façon à créer un différentiel de pression entre ledit compartiment amont et ledit compartiment perméat ;
- mesurer le débit de liquide correspondant à l'air passant par les orifices de fuite sous l'effet dudit différentiel de pression ainsi que la pression régnant dans ledit compartiment perméat ;
- après stabilisation de la pression à une pression $P_{test}$ prédéterminée, et avant que le compartiment perméat ne soit vidé de son liquide, mesurer le débit de liquide $Q_{test}$ constant correspondant ;
- évaluer l'intégrité de la membrane en fonction du débit $Q_{test}$ mesuré.

Le principe de l'invention consiste donc à suivre l'évolution de la pression régnant dans le compartiment perméat et à déterminer pour une pression stabilisée $P_{test}$ quel est le débit de liquide $Q_{test}$ correspondant à l'air transversant la membrane, ce débit étant représentatif de l'intégrité de la membrane.

Contrairement à la technique mise en oeuvre dans le brevet US-A-5353630, le procédé selon l'invention ne met pas en oeuvre d'air sous pression mais inversement un vide partiel. Ainsi, il peut être utilisé pour les installations de filtration membranaire n'incluant pas de moyens d'amenée d'air sous pression.

De plus, le procédé selon l'invention met en oeuvre le principe de la mesure du point de bulle en provoquant le passage d'air à travers la membrane encore mouillée dans le sens utilisé au cours de la filtration. Ceci présente l'avantage de ne pas fragiliser la membrane testée et, particulièrement dans le cas de membranes asymétriques ou composites, de ne pas induire une dilatation préjudiciable de la membrane.

La pression $P_{test}$ choisie pour le test sera déterminée par l'homme de l'art en fonction de la membrane testée et pourra être plus ou moins faible. En pratique, cette pression sera préférentiellement comprise entre environ 0,2 bar et 0,9 bar (pression absolue). On notera par ailleurs que le débit de liquide $Q_{test}$ à cette pression $P_{test}$ sera mesuré avant que le compartiment ne soit complètement vidé de son liquide.

Le procédé selon l'invention permet de mesurer un débit Qtest qui correspond à l'air qui traverse la membrane et s'accumule dans la partie supérieure du compartiment perméat et d'évaluer à partir de cette mesure l'intégrité de la membrane testée.

Toutefois, afin de permettre une évaluation plus précise de cette intégrité, le procédé selon l'invention propose préférentiellement de corriger le débit mesuré $Q_{test}$.

Une première correction proposée par l'invention permet de passer du débit $Q_{test}$ mesuré à la pression $P_{test}$ régnant dans le compartiment perméat, au débit réel dans les orifices $Q_{orif}$ à pression moyenne régnant dans la membrane $(P_{atm} + P_{test})/2$.

En utilisant la loi des gaz parfaits, on estime ce débit d'air dans les orifices à:

$$Q_{orif} = Q_{test} \, (P_{test} / (P_{atm} + P_{test}/ 2))$$

Une deuxième correction consiste à passer des conditions du test à celles correspondant à la fitration, ce qui nécessite de passer de l'air au liquide (correction de viscosité) et de la pression transmembranaire du test $(P_{atm} - P_{test})$ à la pression transmembranaire de filtration $(\Delta P_{filt})$. On utilise pour ce faire l'équation de Hagen-Poisseuille qui décrit l'écoulement laminaire dans un cylindre:

$$Q \, \mu/\Delta P = \pi d^4/128l$$

dans laquelle Q est le débit dans le cylindre, d, le diamètre de l'orifice cylindrique, $\Delta P$ la perte de charge, $\mu$ la viscosité et l la longueur du cylindre.

Cette équation appliquée au test selon l'invention donne :

$$Q_{orif} \, \mu_{air} / (P_{atm} - P_{test}) = \pi d^4/128 \, l$$

Cette même équation appliquée à la filtration donne :

$$Q_{fuite} \, \mu_{liquide} / \Delta P_{filt} = \pi d^4 / 128 \, l$$

De ces deux équations, on tire :

$$Q_{fuite} = Q_{orif} \, \mu_{air} \, \Delta P_{filt} / \mu_{liquide} \, (P_{atm} - P_{test})$$

En remplaçant $Q_{orif}$ par sa valeur ci-dessus lors de la première correction on obtient une expression pour $Q_{fuite}$ exprimée en fonction de variables connues :

$$Q_{fuite} = Q_{test} \, (\mu_{air}^2 \, \Delta P_{filt} \, P_{test}) / (\mu_{liquide} \, (P_{atm}^2 - P_{test}^2))$$

En définissant $f_1 = \mu_{liquide} /\mu_{air}$ et $f_2 = (P_{atm}^2 - P_{test}^2) / 2 \, \Delta P_{filt} \, P_{test,}$ on peut exprimer $Q_{fuite,}$ par l'équation suivante :

$$Q_{fuite} = Q_{test} / f_1 \, f_2,$$

dans laquelle $f_1$ est un facteur de correction de viscosité du liquide filtré par rapport à l'air, et $f_2$ est un facteur de correction de pression. La valeur du débit de fuite corrigé $Q_{fuite}$ est préférentiellement calculée dans le cadre du procédé selon l'invention.

On notera que le mode de correction du débit $Q_{test}$ précisé ci-dessus n'est nullement limitatif et que l'homme de l'art pourra envisager de corriger $Q_{test}$ selon un autre procédé sans sortir du cadre de l'invention.

Egalement préférentiellement, l'intégrité de la membrane testée est évaluée en calculant l'abattement logarithmique de ladite membrane à partir dudit débit de fuite $Q_{fuite}$ et du débit filtré $Q_{filt}$ sur ladite membrane, en appliquant l'équation :

$$AL = \log_{10}(Q_{fuite}/Q_{filt})$$

Ce mode de calcul part de l'hypothèse selon laquelle toutes les particules (e.g. micro-organismes) présentes dans le débit de fuite traversent la membrane alors que toutes les particules présentes dans le débit filtré sont arrêtées par la membrane.

Préférentiellement, le procédé selon l'invention comprend également une étape consistant à calculer le diamètre des orifices de fuite de la membrane en fonction de la pression transmembranaire en appliquant l'équation $d = 4 \gamma K_t / \Delta P$ avec $\gamma \Delta P$ et $K_t$ tels que définis ci-dessus.

Par ailleurs, selon une variante intéressante de l'invention, ladite étape consistant à remplir d'air ledit compartiment amont de façon à placer ce compartiment à la pression atmosphérique est effectuée en vidangeant ledit compartiment. Une telle caractéristique préférentielle est particulièrement adaptée aux installations à membranes immergées dont la vidange permet d'exposer rapidement à l'air le côté filtrat des membranes. C'est la raison pour laquelle le procédé selon l'invention est avantageusement mis en oeuvre sur ce type de membranes, notamment celles constituées de fibres creuses.

Lorsque le procédé sera mis en oeuvre sur une installation ne comportant pas de moyens de vidange, l'exposition à l'air de la membrane dans le compartiment perméat sera obtenue par aspiration du liquide libre présent dans ce compartiment grâce aux moyens permettant la création d'un vide partiel dans le compartiment perméat.

Selon une variante intéressante de l'invention, le procédé est mis en oeuvre parallèlement sur plusieurs membranes ou jeux de membranes et, lorsqu'un défaut d'intégrité est constaté à ce stade, chacune desdites membranes ou chacun desdits jeux de membranes est testé(e) ultérieurement successivement afin de déterminer le ou lesdites membrane(s) ou le ou lesdits jeu(x) de membranes présentant un défaut d'intégrité.

L'invention concerne également une installation pour la mise en oeuvre du procédé décrit ci-dessus, ladite installation comprenant au moins un dispositif de filtration incluant au moins un jeu de membranes de filtration délimitant au moins un compartiment amont accueillant un liquide à filtrer et au moins un compartiment perméat recueillant ledit liquide filtré, et étant caractérisée en ce qu'elle comprend des moyens pour placer ledit compartiment amont à la pression atmosphérique, des moyens pour créer un vide partiel dans ledit compartiment perméat, des moyens permettant de mesurer la pression dans ledit compartiment perméat et des moyens permettant de mesurer le débit de liquide correspondant à l'air traversant ladite membrane.

Préférentiellement, l'installation selon l'invention comprend des moyens pour calculer le débit de fuite et/ou l'abattement logarithmique de ladite membrane et/ou le diamètre des orifices de fuites. Comme indiqué ci-dessus, ces paramètres sont intéressants pour déterminer plus précisément l'état de la membrane.

Egalement préférentiellement, lesdits moyens pour créer un vide partiel dans le compartiment perméat comprennent au moins une pompe munie de moyens permettant de réguler son débit pour maintenir la pression constante, telle qu'avantageusement une pompe à déplacement positif.

Avantageusement, lesdites membranes sont des membranes immergées à fibres creuses. En effet, comme déjà indiqué, le procédé selon l'invention est particulièrement facile à mettre en oeuvre avec de telles membranes.

Préférentiellement, la capacité de ladite pompe est définie comme une fraction (préférentiellement $10^{-3}$ à $10^{-6}$) du débit de filtration de la membrane ou des membranes testée(s)

Avantageusement, ledit dispositif de filtration présente des moyens de vidange du compartiment amont. Comme déjà précisé, dans le cadre d'installations à membranes immergées, de telles moyens de vidange permettent d'exposer facilement les membranes mouillées à l'air. Lorsque l'étape consistant à placer le compartiment amont à la pression atmosphérique ne pourra pas être obtenu en vidangeant ce compartiment, cette étape pourra être effectuer en aspirant le liquide libre dans le compartiment amont en mettant en oeuvre les moyens amont permettant de créer un vide partiel dans le compartiment perméat et en prévoyant une admission d'air ambiant dans le compartiment amont.

Selon une variante intéressante de l'invention, ledit dispositif de filtration comprend une pluralité de modules de membranes, lesdits moyens pour créer un vide partiel et lesdits moyens de calcul étant communs auxdits modules, et des moyens de sélection pour mettre en oeuvre les moyens précités soit sur l'ensemble desdits modules soit seulement sur un ou plusieurs d'entre eux. De cette manière, le procédé selon l'invention peut être mené globalement sur un ensemble de membranes ou de modules membranaires et, en cas de résultat négatif à ce stade, il est possible d'isoler un ou plusieurs de ces modules ou une ou plusieurs de ces membranes, afin de déterminer quels éléments sont touchés. Les moyens de sélection en question pourront par exemple être constituées d'un réseau de vannes manuelles ou d'électrovannes.

L'invention, ainsi que les différents avantages qu'elle présente seront plus facilement compris grâce à la description qui va suivre d'un mode non limitatif de réalisation de celle-ci en référence aux dessins, dans lesquels :

- la figure 1 est un schéma montrant le principe du procédé selon l'invention ;
- la figure 2 représente une installation de filtration d'eau à membranes immergées selon la représente invention ;
- la figure 3 représente la variation du débit et de la pression régnant dans le compartiment perméat au cours de la mise en oeuvre du procédé selon l'invention ;
- la figure 4 représente un autre mode de réalisation d'une installation selon l'invention.

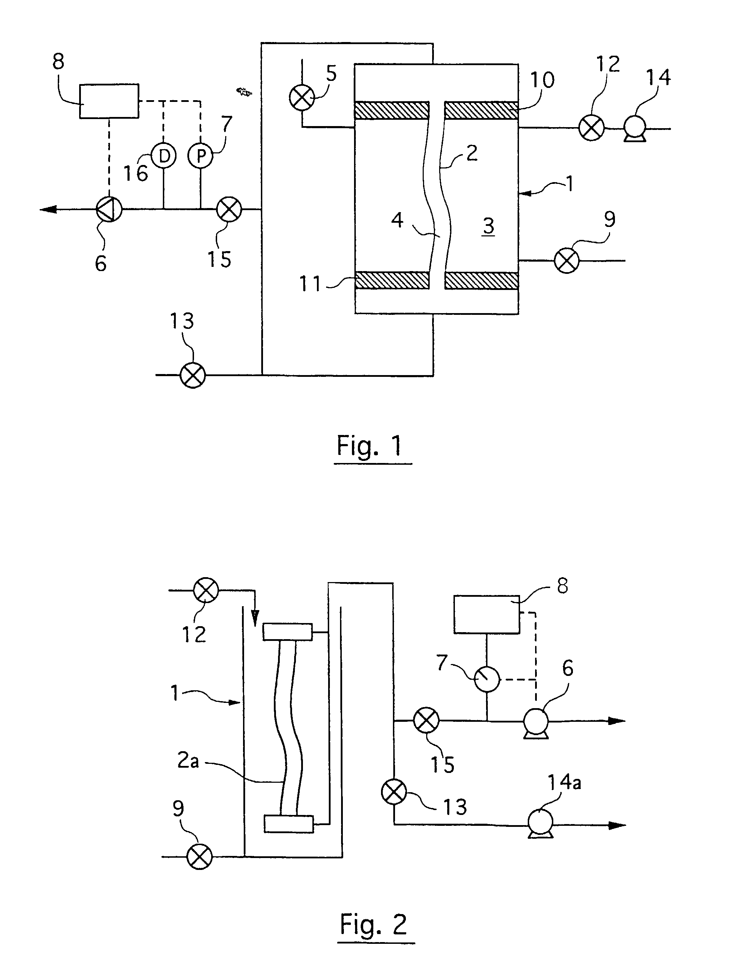

En référence à la figure 1, le procédé selon l'invention est exposé en regard d'une installation de filtration incluant un dispositif membranaire de filtration 1 ne montrant, pour des raisons de clarté de la description, qu'une seule membrane 2 constituées par des fibres creuses disposées verticalement dans ledit dispositif, une seule fibre creuse étant représentée, toujours pour la clarté de la description. Cette fibre creuse délimite au sein du dispositif de filtration 1, d'une part un compartiment amont 3 situé à l'extérieur de la fibre et accueillant un liquide à filtrer, et d'autre part un compartiment perméat 4 constitué par la lumière de la fibre creuse. La membrane 2 est isolée par des joints de colle 10,11 prévus respectivement dans sa partie supérieure et dans sa partie inférieure. Le dispositif 1 comprend par ailleurs, d'une part des moyens d'alimentation du dispositif 1 en liquide à filtrer directement reliés au compartiment amont 3, lesdits moyens d'alimentation étant essentiellement constitués par une vanne 12 et une pompe 14, et d'autre part des moyens pour soutirer le liquide filtré (perméat) directement reliés au compartiment perméat 4, lesdits moyens étant constitués essentiellement par une vanne 13.

Conformément à la présente invention, l'installation comprend, des moyens 5 permettant de placer le compartiment amont à la pression atmosphérique, des moyens 9 permettant de vidanger ce compartiment, des moyens 6 permettant de créer un vide partiel dans le compartiment perméat 4, des moyens 7 (manomètre extérieur) permettant de mesurer la pression régnant dans ce compartiment par un capteur de pression placé à mi-hauteur de l'ensemble de membranes, des moyens 16 (débit-mètre) permettant de mesurer le débit d'eau correspondant à l'air traversant la membrane et des moyens 8 pour mesurer le niveau de vide partiel et pour calculer à partir des valeurs de débit relevées, le débit de fuite de la membrane et l'abattement logarithmique de celle-ci.

On notera que le débit-mètre 16 pourra être remplacé par une mesure de la vitesse de la rotation de la pompe.

La pression régnant dans le compartiment perméat peut être lue sur le manomètre extérieur 7. Celui-ci étant prévu à mi-hauteur de l'ensemble membranaire, il donne en effet directement la pression $P_{test}$. Il pourra bien sûr aussi être envisagé de placer ce manomètre en une autre position, et d'obtenir $P_{test}$ par un simple calcul.

Dans le cadre du présent mode de réalisation, les moyens 9 sont constitués par une simple vanne de vidange montée dans la partie inférieure du compartiment amont 3 les moyens 5 sont constituées par une vanne prévue dans sa partie supérieure. Les moyens pour créer un vide partiel dans le compartiment amont incluent avantageusement une pompe à déplacement positif 6 permettant d'obtenir une pression constante par variation de sa vitesse de rotation. Cette pompe est reliée au compartiment perméat 4 par une canalisation munie d'une vanne 15.

Lors de la mise en oeuvre du procédé selon l'invention, le mode filtration de celle-ci est arrêté. A cet effet, l'alimentation en liquide à filtrer est stoppée en fermant les vannes 12 et 13 et en arrêtant la pompe 14.

Ensuite, le compartiment amont 3 est vidangé et mis à la pression atmosphérique en ouvrant concomitamment les vannes 5 et 9. Une fois, ce compartiment vidé du liquide à filtrer et placé à la pression atmosphérique, la vanne 15 est ouverte et la pompe 6 est mise en oeuvre de façon à appliquer un vide partiel dans le compartiment perméat 4 et un passage d'air à travers les orifices de fuite pouvant exister dans la membrane sous l'effet du différentiel de pression existant entre ce compartiment perméat 4 et le compartiment amont 3. Comme il sera explicité ci-après plus en détail, la pression régnant dans ce compartiment diminue progressivement jusqu'à atteindre une valeur prédéterminée $P_{test}$. Parallèlement, le débit de liquide correspondant diminue également progressivement jusqu'à atteindre un débit de fuite $Q_{test}$. Les pressions et les débits sont mesurés en continu. Lorsqu'à la pression $P_{test}$, le débit de fuite $Q_{test}$ sensiblement constant est mesuré, cette donnée est transmis aux moyens de calcul 8 permettant de calculer le débit de fuite corrigé en fonction de la pression et de la viscosité, et l'abattement de la membrane. A cet effet, les moyens de calcul incluent des moyens permettant d'entrer les paramètres et constantes nécessaires à ces calculs.

En référence à la figure 2, une autre installation de filtration d'eau à membranes immergées est représentée. Dans ce type d'installation l'alimentation n'est pas effectuée sous pression mais le perméat est soutiré grâce à une pompe 14 a. (Les éléments structurels communs aux figures 1 et 2 sont référencés à l'aide des mêmes références). Cette figure montre des membranes sous la forme d'un module de filtration 2a constituée d'une pluralité de membranes directement immergées dans le liquide à filtrer. En mode filtration, le perméat est évacué à la fois par le haut et par le bas des modules. Dans le cadre du présent mode de réalisation, le module de filtration 2a est constitué de membranes immergées ZeeWeed (marque déposée par Zenon Environmental Inc., Burlington, Canada) présentant une surface de filtration de 13, 9 m$^2$ et une hauteur de 1,80 m Enfin, on notera que, par rapport à l'installation décrite en référence à la figure 1, les moyens de mesure du débit d'eau correspondant à l'air traversant la membrane sont remplacés par une mesure de la vitesse de la rotation de la pompe

L'intégrité des membranes de l'installation montrée à la figure 2 a été testée selon l'invention.

Au cours de ce test, les paramètres suivants ont été entrés par un opérateur dans les moyens de calcul 8 :

| | |
|---|---|
| Hauteur des membranes | 1,80 m |
| Pression atmosphérique $P_{atm}$ | 1,01 bar |
| Pression absolue $P_{test}$ atteinte pendant le test ramenée au centre de l'ensemble de membranes | 0,61 bar |
| Débit de fuite $Q_{test}$ mesuré pendant le test | 42 l/h |
| Tension superficielle à l'interface eau-air $\gamma$ | 0,0723 N/m |
| Facteur de correction $K_t$ de la membrane | 0,25 |
| Viscosité de l'air $\mu_{air}$ | 0,0182 cP |
| Viscosité de l'eau $\mu_{eau}$ | 1,0019cP |
| Débit en filtration | 700 l/h |
| La presssion transmembranaire moyenne en filtration ($\Delta P$) | 0,4 bar |

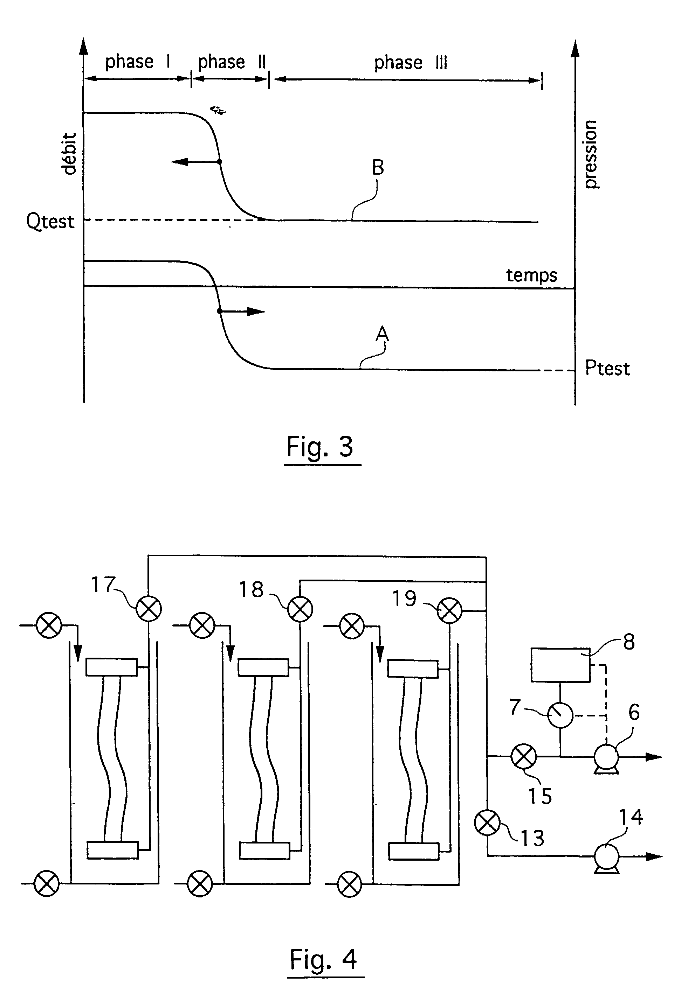

En référence à la figure 3, la courbe A montre l'évolution dans le temps de la pression régnant au cours du test dans le compartiment perméat et la courbe B montre l'évolution dans le temps du débit correspondant.

Tant la courbe A que la courbe B montrent essentiellement trois phases I, II et III telles qu'indiquées sur la figure 3.

La phase I, au début du test correspond à l'évacuation de l'eau libre à une pression proche de la pression statique. Cette phase est courte dans le cadre du présent mode de réalisation puisqu'il ne reste que peu d'eau libre dans le compartiment amont, cette eau ayant été presque totalement évacuée par les moyens de vidange. Par contre, dans d'autres modes de réalisation, lorsque cette eau libre ne pourra pas être vidangée, l'eau libre sera évacuée en mettant en oeuvre la pompe prévue pour créer un vide partiel dans le compartiment perméat. La phase I sera alors beaucoup plus longue.

Durant la phase II, la pression négative créée par la pompe 6 contracte la membrane, ce qui a pour effet d'entraîner une chute rapide du débit.

Enfin, au cours de la phase III, la pression régnant à l'intérieur du compartiment perméat se stabilise à la valeur choisie pour le test et le débit mesuré $Q_{test}$ correspond aux fuites par les orifices qui laissent passer l'air. Dans le cadre du présent mode de réalisation, la pression $P_{test}$ a été fixée 0,61 bar et le débit d'eau mesuré à a été de 42 l / h. Ces données ont été rentrées dans les moyens de calcul 8 comme indiqué ci-dessus.

Grâce aux paramètres entrées dans les moyens de calcul 8, ceux-ci ont établi le diamètre des orifices laissant passer l'air, le débit de fuite corrigé et l'abattement logarithmique de la membrane.

Calcul des diamètres des orifices de fuite

Ces diamètres ont été évalués grâce à l'équation :

$$d = 4 \, \gamma \, K_t / \Delta P$$

dans laquelle $\gamma$ est la tension superficielle à l'interface air-liquide, $\Delta P$ est la pression transmembranaire, et $K_t$ est un facteur de correction représentatif de la tortuosité des pores de ladite membranes.

La pression transmembranaire a été calculée pour le haut de la membrane et pour le bas de la membrane en tenant compte du fait que la hauteur de celle-ci est de 1,80m et que la pression transmembranaire moyenne est de à 0,4 bar. Ce calcul aboutit à une pression transmembranaire dans le haut de la membrane égale à 0,31 bar et à une pression transmembranaire dans le bas de la membrane égale à 0,49 bar correspondant respectivement à des orifices de fuite de 1,5 $\mu$m et 2,3 $\mu$m.

Calcul du débit de fuite corrigé $Q_{fuite}$

Ce débit corrigé a été établi à partir du débit mesuré $Q_{test}$ qui a été relevé à 42 l/h

Les facteurs de correction $f_1$ et $f_2$ ont été établis grâce aux équations indiquées ci-dessus et les résultats suivants ont été obtenus :

facteur de correction de la viscosité $f_1$ :

$$f_1 = \mu_{eau} / \mu_{air} = 1{,}0019 / 0{,}0182 = 55$$

facteur de correcion de la pression $f_2$ :

$$f_2 = (P_{atm}{}^2 - P_{test}{}^2)/2 \, \Delta P_{filt} \, P_{test} = (1{,}01^2 - 0{,}61^2)/2 \times 0{,}40 \times 0{,}61 = 1{,}33$$

L'équation $Q_{fuite} = Q_{test} / f_1 \, f_2$ a ensuit été utilisée par les moyens de calcul et la valeur $Q_{fuite} = 0{,}575$ l/h a été obtenue.

Calcul de l'abattement logarithmique AL de la membrane

L'équation AL $= \log_{10} (Q_{fuite}/Q_{filt})$ a été utilisée par les moyens de calcul et la valeur AL = 3,1 a été obtenue.

En référence à la figure 4, un autre mode de réalisation de l'installation selon l'invention est représenté, ladite installation comprenant trois modules de filtration identiques à celui de la figure 1. L'installation comprend par ailleurs une pompe 6, des moyens de mesure du débit d'eau 7 et des moyens de calcul 8 communs aux trois modules. Chaque module est équipé d'un capteur de la pression régnant dans son compartiment perméat et relié aux moyens de calculs 8.

Enfin, des moyens de sélection constitués par un réseau de vannes 15,17,18,19, permettent de placer les moyens 6,7, 8 en communication avec tous les modules ou seulement en communication avec un seul d'entre eux. Une telle disposition permet de mettre en oeuvre le procédé selon l'invention en premier lieu pour l'ensemble des modules et, si un défaut d'intégrité est relevé à ce stade, en second lieu pour seulement un seul de ces modules afin de déterminer quel(s) module(s) est (sont) effectivement touché(s).

Les modes de réalisation de l'invention présentés ici peuvent présenter des modifications portant sur le type de membranes, sur leur configuration et bien sûr sur les pressions utilisées.

**Revendications**

1. Procédé pour tester l'intégrité d'au moins une membrane de filtration d'un liquide, ladite membrane délimitant au sein d'un dispositif de filtration un compartiment amont accueillant ledit liquide à filtrer et un compartiment perméat recueillant ledit liquide filtré, ledit procédé étant caractérisé en ce qu'il comprend les étapes consistant à :

   - remplir ledit compartiment amont d'air pour le mettre à la pression atmosphérique $P_{atm}$ et appliquer un vide partiel dans ledit compartiment perméat de façon à créer un différentiel de pression entre ledit compartiment amont et ledit compartiment perméat ;
   - mesurer le débit de liquide correspondant à l'air passant par les orifices de fuite sous l'effet dudit différentiel de pression ainsi que la pression régnant dans ledit compartiment perméat ;
   - après stabilisation de la pression mesurée à une pression $P_{test}$ prédéterminée et, avant que le compartiment perméat ne soit vidé de son liquide, mesurer le débit de liquide $Q_{test}$ constant correspondant ;
   - évaluer l'intégrité de la membrane en fonction du débit $Q_{test}$ mesuré.

2. Procédé selon la revendication 1 caractérisé en ce que la pression $P_{test}$ utilisée est comprise entre environ 0,2 bar et 0,9 bar (pression absolue).

3. Procédé selon la revendication 1 ou 2 caractérisé en ce qu'il comprend une étape supplémentaire consistant à corriger le débit mesuré $Q_{test}$ en appliquant l'équation $Q_{fuite} = Q_{test} / f_1 \, f_2$, dans laquelle $f_1$ est un facteur de correction de viscosité du liquide filtré par rapport à l'air, et $f_2$ est un facteur de correction de pression.

4. Procédé selon la revendication 3 caractérisé en ce que ladite étape consistant à évaluer l'intégrité de la membrane est effectuée en calculant l'abattement logarithmique AL de ladite membrane à partir du débit de fuite $Q_{fuite}$ et du débit filtré $Q_{filt}$ sur ladite membrane, en appliquant l'équation AL $= \log_{10} (Q_{fuite}/Q_{filt})$.

5. Procédé selon l'une des revendications 1 à 4 caractérisé en ce qu'il comprend une étape consistant à calculer le diamètre des orifices de fuite en fonction de la pression transmembranaire en appliquant l'équation d= $4\,\gamma\,K_t\,/\Delta P$ dans laquelle $\Delta P$ est la pression transmembranaire, et $K_t$ est un facteur de correction représentatif de la tortuosité des pores de ladite membranes.

6.  Procédé selon l'une des revendications 1 à 5 caractérisé en ce que ladite membrane est une membrane immergée constituée de fibres creuses.

7.  Procédé selon la revendication 6 caractérisé en ce que ladite étape consistant à remplir d'air ledit compartiment amont est effectuée en vidangeant ledit compartiment.

8.  Procédé selon l'une des revendication 1 à 5 caractérisé en ce que ladite étape consistant à remplir d'air ledit compartiment amont est effectuée en aspirant le liquide libre présent dans le compartiment amont en mettant en oeuvre les moyens amont permettant de créer un vide partiel dans le compartiment perméat et en prévoyant une admission d'air ambiant dans le compartiment amont.

9.  Procédé selon l'une des revendications 1 à 8 caractérisé en ce qu'il est mis en oeuvre parallèlement sur plusieurs membranes ou jeux de membranes et, lorsqu'un défaut d'intégrité est constaté à ce stade, en ce qu'il consiste à tester ultérieurement successivement chacune desdites membranes ou chacun desdits jeux de membranes afin de déterminer le ou lesdites membrane(s) ou le ou lesdits jeu(x) de membranes présentant un défaut d'intégrité.

10. Installation pour la mise en oeuvre du procédé selon l'une des revendications 1 à 9, ladite installation comprenant au moins un dispositif de filtration (1) incluant au moins une membrane de filtration (2) délimitant au moins un compartiment amont (3) accueillant un liquide à filtrer et au moins un compartiment perméat (4) recueillant ledit liquide filtré, ladite installation étant caractérisée en ce qu'elle comprend des moyens (5) pour placer ledit compartiment amont (3) à la pression atmosphérique, des moyens pour créer un vide partiel (6) dans ledit compartiment perméat (4), des moyens (7) pour mesurer la pression régnant dans ledit compartiment perméat, et des moyens (16) permettant de mesurer le débit de liquide correspondant à l'air traversant ladite membrane (2).

11. Installation selon la revendication 10 caractérisée en ce qu'elle comprend des moyens (8) pour calculer le débit de fuite et/ou l'abattement logarithmique et/ou le diamètre des orifices de fuites de ladite membrane.

12. Installation selon l'une des revendications 10 ou 11 caractérisée en ce lesdits moyens (6) pour créer un vide partiel dans le compartiment perméat comprennent au moins une pompe munie de moyens permettant de réguler son débit pour maintenir la pression constante.

13. Installation selon la revendication 12 caractérisée en ce que la capacité de ladite pompe est définie comme une fraction du débit de filtration de la membrane ou des membranes testée(s).

14. Installation selon l'une des revendications 10 à 13 caractérisé en ce que lesdites membranes sont des membranes immergées à fibres creuses.

15. Installation selon la revendication 14 caractérisée en ce que ledit dispositif de filtration (1) présente des moyens de vidange (9) du compartiment amont.

16. Installation selon l'une des revendications 10 à 15 caractérisée en ce que ledit dispositif de filtration (1) comprend une pluralité de modules de membranes, lesdits moyens (6) pour créer un vide partiel, lesdits moyens de mesure (7) et lesdits moyens de calcul (8) étant communs auxdits modules, et des moyens de sélection pour mettre en oeuvre lesdits moyens (6,7,8) soit sur l'ensemble desdits modules soit seulement sur un ou plusieurs d'entre eux.

**Patentansprüche**

1.  Prüfverfahren der Integrität von mindestens einer Filterungsmembran für Flüssigkeiten, wobei die Membran innerhalb einer Filterungsvorrichtung ein stromaufwärts befindliches Abteil abgrenzt, welches die zu filternde Flüssigkeit aufnimmt sowie ein Permeatabteil, das die gefilterte Flüssigkeit aufnimmt, gekennzeichnet durch folgende Verfahrensschritte:

    Füllen des stromaufwärts gelegenen Abteils mit Luft, um dort Atmosphärendruck $P_{atm}$ einzustellen und Er-

zeugen eines Teilvakuums im Permeatabteil, um ein Druckgefälle zwischen dem stromaufwärts gelegenen Abteil und dem Permeatabteil zu erzielen;

Messen des Flüssigkeitsdurchsatzes, welcher der aufgrund des Druckgefälles und des im Permeatabteil herrschenden Druckes durch die Verlustöffnungen fließenden Luftmenge entspricht;

nachdem sich der gemessene Druck auf einem vorgegebenen Wert $P_{test}$ stabilisiert hat und vor dem Entleeren der Flüssigkeit aus dem Permeatabteil, Messung des entsprechenden konstanten Flüssigkeitsdurchsatzes $Q_{test}$;

Schätzen der Integrität der Membran als Funktion des gemessenen Durchsatzes $Q_{test}$.

**2.** Verfahren gemäß Anspruch 1,
dadurch gekennzeichnet, daß der verwendete Druck $P_{test}$ zwischen 0,2 und 0,9 bar (absolut) liegt.

**3.** Verfahren gemäß Anspruch 1 oder 2,
dadurch gekennzeichnet, daß es einen zusätzlichen Schritt umfaßt, bei dem der gemessene Durchsatz $Q_{test}$ durch Anwendung der Gleichung $Q_{verlust} = Q_{test}/f_1 \, f_2$ korrigiert wird, wobei $f_1$ ein Korrekturfaktor für die Viskosität der gefilterten Flüssigkeit im Verhältnis zur Luft und $f_2$ ein Korrekturfaktor für den Druck ist.

**4.** Verfahren gemäß Anspruch 3,
dadurch gekennzeichnet, daß der Schritt bei dem die Integrität der Membran geschätzt wird, durch Berechnung der logarithmischen Reduktion AL der Membran, ausgehend vom Verlustdurchsatz $Q_{verlust}$ und des durch diese Membran gefilterten Durchsatzes $Q_{filt}$, wobei die Gleichung $AL = \log_{10} (Q_{verlust}/Q_{filt})$ angesetzt wird.

**5.** Verfahren gemäß einem der Ansprüche 1 bis 4,
dadurch gekennzeichnet, daß es einen Schritt umfaßt, bei dem der Durchmesser der Verlustöffnungen als Funktion des Transmembrandrucks berechnet wird, durch Anwendung der Gleichung $d = 4\_K_t/\_P$, wobei $\_P$ der Transmembrandruck und $K_1$ ein für die inneren Windungen der Membranporen repräsentativer Korrekturfaktor ist.

**6.** Verfahren gemäß einem der Ansprüche 1 bis 5,
dadurch gekennzeichnet, daß die Membran eine eingetauchte Hohlfasermembran ist.

**7.** Verfahren gemäß Anspruch 6,
dadurch gekennzeichnet, daß der Schritt zum Füllen des stromaufwärts liegenden Abteils mit Luft durch Entleeren dieses Abteils erfolgt.

**8.** Verfahren gemäß einem der Ansprüche 1 bis 5,
dadurch gekennzeichnet, daß der Schritt zum Füllen des stromaufwärts liegenden Abteils mit Luft durch Absaugen der im stromaufwärts liegenden Abteil befindlichen freien Flüssigkeit erfolgt, durch Einsatz der stromaufwärts liegenden Mittel, die das Erzeugen eines Teilvakuums im Permeatabteil erlauben und durch Zulassen des Eintritts von Umgebungsluft im stromaufwärts liegenden Abteil.

**9.** Verfahren gemäß einem der Ansprüche 1 bis 8,
dadurch gekennzeichnet, daß es parallel über mehrere Membranen oder Membransätze angewandt wird und, daß wenn hierbei ein Integritätsfehler festgestellt wird, es im nachträglichen Prüfen aller Membranen oder Membransätze nacheinander besteht, um die Membran(e) oder den Membransatz (die Membransätze) festzustellen, der (die) ein Integritätsfehler aufweist (aufweisen).

**10.** Anlage zur Anwendung des Verfahrens nach einem der Ansprüche 1 bis 9, die mindestens eine Filterungsvorrichtung (1) umfaßt, welche ihrerseits mindestens eine Filterungsmembran (2) enthält, die mindestens ein stromaufwärts liegendes Abteil (3), das die zu filternde Flüssigkeit aufnimmt und mindestens ein Permeatabteil (4) abgrenzt, das die gefilterte Flüssigkeit aufnimmt,

wobei die Anlage dadurch gekennzeichnet ist, daß sie über Mittel (5) verfügt, um in dem stromaufwärts liegenden Abteil (3) Atmosphärendruck einzustellen, ferner über Mittel zum Erzeugen eines Teilvakuums (6) im Permeatabteil (4), über Mittel (7) zum Messen des Drucks im Permeatabteil und über Mittel (16) zum Messen des Flüssigkeitsdurchsatzes, der dem Luftstrom durch die Membran (2) entspricht.

**11.** Anlage gemäß Anspruch 10,
dadurch gekennzeichnet, daß sie über Mittel (8) zum Berechnen des Verlustdurchsatzes und/oder der logarithmischen Reduktion und/oder des Durchmessers der Verlustöffnungen dieser Membran verfügt.

**12.** Anlage gemäß Anspruch 10 oder 11,
dadurch gekennzeichnet, daß die Mittel (6) zum Erzeugen eines Teilvakuums im Permeatabteil mindestens eine Pumpe umfassen, die über Mittel zum Regeln des Durchsatzes verfügt, um den Druck konstant zu halten.

**13.** Anlage gemäß Anspruch 12,
dadurch gekennzeichnet, daß die Kapazität der Pumpe als Teil des Filterungsdurchsatzes der geprüften Membran oder Membranen definiert ist.

**14.** Anlage gemäß einem der Ansprüche 10 bis 13,
dadurch gekennzeichnet, daß die Membranen eingetauchte Hohlfasermembranen sind.

**15.** Anlage gemäß Anspruch 14,
dadurch gekennzeichnet, daß die Filterungsvorrichtung (1) Mittel zum Entleeren (9) des stromaufwärts liegenden Abteils umfaßt.

**16.** Anlage gemäß einem der Ansprüche 10 bis 15,
dadurch gekennzeichnet, daß die Filterungsvorrichtung (1) über eine Vielfalt von Membranmodulen verfügt, wobei die Mittel (6) zum Erzeugen eines Teilvakuums, die Mittel zum Messen (7) und die Mittel zum Berechnen (8) den Modulen gemeinsam sind, sowie über Auswahlmittel für den Einsatz der Mittel (6, 7, 8) entweder über die Gesamtheit der Module oder nur über eines oder mehrere dieser Module.

**Claims**

**1.** Process for testing the integrity of at least one liquid filtration membrane, the said membrane delimiting an upstream compartment within a filtration device that collects the said liquid to be filtered, and a permeate compartment that collects the said filtered liquid, the said process being characterized in that it comprises the steps consisting of:

filling the said upstream compartment with air to vent it to atmospheric pressure $P_{atm}$ and applying a partial vacuum in the said permeate compartment in order to create a pressure difference between the said upstream compartment and the said permeate compartment;
measuring the liquid flow corresponding to the air passing through leak orifices under the effect of the said pressure difference, and the pressure existing in the said permeate compartment;
after stabilization of the pressure at a predetermined pressure $P_{test}$, and before all the liquid has drained out of the permeate compartment, measuring the corresponding constant liquid flow $Q_{test}$;
evaluating the integrity of the membrane as a function of the measure flow $Q_{test}$.

**2.** Process according to claim 1, characterized in that the pressure $P_{test}$ used is between about 0.2 bars and 0.9 bars (absolute pressure).

**3.** Process according to claim 1 or 2, characterized in that it comprises an additional step consisting of correcting the measured flow $Q_{test}$ by applying the equation $Q_{leak} = Q_{test} / f_1 f_2$, in which $f_1$ is an air viscosity - filtered liquid viscosity correction factor, and $f_2$ is a pressure correction factor.

**4.** Process according to claim 3, characterized in that the said step consisting of evaluating the integrity of the membrane is carried out by calculating the logarithmic deterioration AL of the said membrane starting from the leakage flow $Q_{leak}$ and the filtered flow $Q_{filt}$ on the said membrane, using the equation $AL=\log_{10} (Q_{leak}/Q_{filt})$.

**5.** Process according to claims 1 to 4, characterized in that it comprises a step consisting of calculating the diameter of the leak orifices as a function of the cross-membrane pressure by applying the equation $d = 4\gamma K_t/\Delta P$, where $\Delta P$ is the cross-membrane pressure and $K_t$ is a correction factor representing tortuosity of the pores of the said membrane.

**6.** Process according to any one of claims 1 to 5, characterized in that the said membrane is an immersed membrane composed of hollow fibers.

**7.** Process according to claim 6, characterized in the said step consisting of filling the said upstream compartment with air is carried out by draining the said compartment.

8. Process according to any one of claims 1 to 5, characterized in that the said step consisting of filling the said upstream compartment with air is carried out by drawing in free liquid present in the upstream compartment, by using upstream means in order to create a partial vacuum in the permeate compartment and by providing an ambient air inlet in the upstream compartment.

9. Process according to any one of claims 1 to 8, characterized in that it is used on several membranes or sets of membranes in parallel, and in that when an integrity defect is found at this stage, it consists of subsequently testing each of the said membranes or each of the said sets of membranes in turn in order to determine which of the said membrane(s) or set(s) of membranes has (have) an integrity defect.

10. Installation for implementation of the process according to any one of claims 1 to 9, the said installation comprising at least one filtration device (1) including at least one filtration membrane (2) delimiting at least one upstream compartment (3) containing the liquid to be filtered and at least one permeate compartment (4) containing the said filtered liquid, the said installation being characterized in that it comprises means (5) of venting the said upstream compartment (3) to atmospheric pressure, means of creating a partial vacuum (6) in the said permeate compartment (4), means (7) of measuring the pressure in the said permeate compartment, and means (16) of measuring the flow of liquid corresponding to air passing through the said membrane (2).

11. Installation according to claim 10, characterized in that it comprises means (8) of calculating the leakage flow and/or the logarithmic deterioration and/or the diameter of the leak orifices in the said membrane.

12. Installation according to claim 10 or 11 characterized in that the said means (6) of creating a partial vacuum in the permeate compartment comprise at least one pump equipped with means of regulating its flow to keep the pressure constant.

13. Installation according to claim 12, characterized in that the capacity of the said pump is defined as a fraction of the filtration flow through the membrane(s) being tested.

14. Installation according to any one of claims 10 to 13, characterized in that the said membranes are immersed membranes with hollow fibers.

15. Installation according to claim 14, characterized in that the said filtration device (1) comprises means (9) of draining the upstream compartment.

16. Installation according to any one of claims 10 to 15, characterized in that the said filtration device (1) comprises a number of membrane modules, the said means (6) of creating a partial vacuum, the said measurement means (7) and the said calculation means (8) being common to the said modules, and selection means for using the said means (6, 7, 8) either on all of the said modules or on one or several of them.

8

D 16

P 7

6

15

13

5

10

12 14

2

1

4 3

11

9

Fig. 1

12

1

2a

9

8

7

15

13

6

14a

Fig. 2

phase I    phase II    phase III

débit

Qtest

temps

B

A

Ptest

pression

## Fig. 3

17    18    19

8

7    6

15

13    14

## Fig. 4